# EUROPEAN PATENT SPECIFICATION

(11) **EP 1 648 645 B1**
(45) Date of publication and mention of the grant of the patent: **26.09.2007**
(21) Application number: 04743292.7
(22) Date of filing: 08.07.2004
(51) Int. Cl.: B23D 61/04, B23D 61/14, B23D 65/00

(54) **SAW BLADE**
SÄGENBLATT
LAME DE SCIE

(30) Priority: 08.07.2003 GB 0315904; 29.11.2003 GB 0327752
(43) Date of publication of application: 26.04.2006
(73) Proprietor: C4 Carbides Limited, Cambridge CB4 1TF (GB)
(72) Inventor: NICOLSON, Peter, John, Cambridge CB4 1TF (GB); DUGGAN, Paul, Edward, Cambridge CB4 1TF (GB)
(74) Representative: Skinner, Michael Paul
(86) International application number: PCT/GB2004/002949
(87) International publication number: WO 2005/005086

(56) References cited:
- EP-A- 0 665 075
- CH-A- 446 859
- DE-A- 2 730 912
- US-A- 2 964 078
- US-A- 3 945 289

## Description

### Field of the Invention

This invention relates to methods of making saw blades and to teeth for such blades.

### Background to the Invention

The applicants' published PCT Specification WO 01/83143 discloses methods of making saw blades by forcing tungsten carbide inserts into apertures in a comparatively soft carrier strip. Building on this technology, the present application is directed to developments which offer the opportunity of cost savings in manufacture of saw blades and greater versatility in the choice of the characteristics of the teeth of saw blades.

Document CH-A-446859 describes a saw blade having a carrier supporting separately formed teeth. Documents EP-A-0665075, US-A-2964078, DE-A-2730912 and US-A-3945289 all describe saw blades having a carrier which defines sockets, slots or the like, for receiving separately formed teeth.

### Summary of the Invention

The invention provides a method of making a saw blade, the method comprising fabricating a plurality of relatively hard teeth having differing shapes corresponding to the desired final shapes of the teeth of the blade, mounting the teeth at desired spaced mounting positions on a carrier of a relatively soft material and securing the teeth in their positions by brazing, wherein the teeth have teeth roots with peripheries which form cutting edges to displace the material of the carrier as the inserts are forced into position.

The teeth may differ in shape or composition.

The pitch of the teeth along the carrier may be constant or may vary. The blade may have a linear or curved edge and the blade edge may be circular.

According to a further aspect of the invention there is provided a tooth for a saw blade, the tooth having a root for attachment to a carrier of the blade and a head forming a cutting portion of the tooth when the latter is advanced in the cutting direction, the root and head being separated by a transition region which, when the tooth is viewed in side view transverse to the cutting direction, is in the shape of a neck as a consequence of having a width less than the maximum width of the root and less than the maximum width of the head, and wherein the root has a periphery which is curvilinear in side view, the curvilinear edge being sufficiently sharp to enable the insert to be forced into the carrier from one side thereof.

### Brief Description of the Drawings

The invention will now be further described, by way of example, with reference to the accompanying drawings, in which:
Figures 1 to 3 are perspective views of three individual teeth according to the invention;
Figure 4 is a composite view illustrating in end view the three teeth of Figures 1 to 3;
Figure 5 is a perspective view of a first form of carrier strip showing teeth being mounted therein;
Figure 6 is a side elevation of the carrier strip of Figure 5;
Figure 7 is a perspective view showing the three teeth of Figures 1 to 3 mounted in the carrier strip of Figure 5;
Figure 8 is a side elevation corresponding to Figure 6, but showing an alternative shape of carrier strip;
Figure 9 illustrates the use of the blade of Figure 7 to form reciprocating blades; and
Figure 10 illustrates a circular saw blade corresponding with the blade of Figure 7.

### Detailed Description of the Drawings

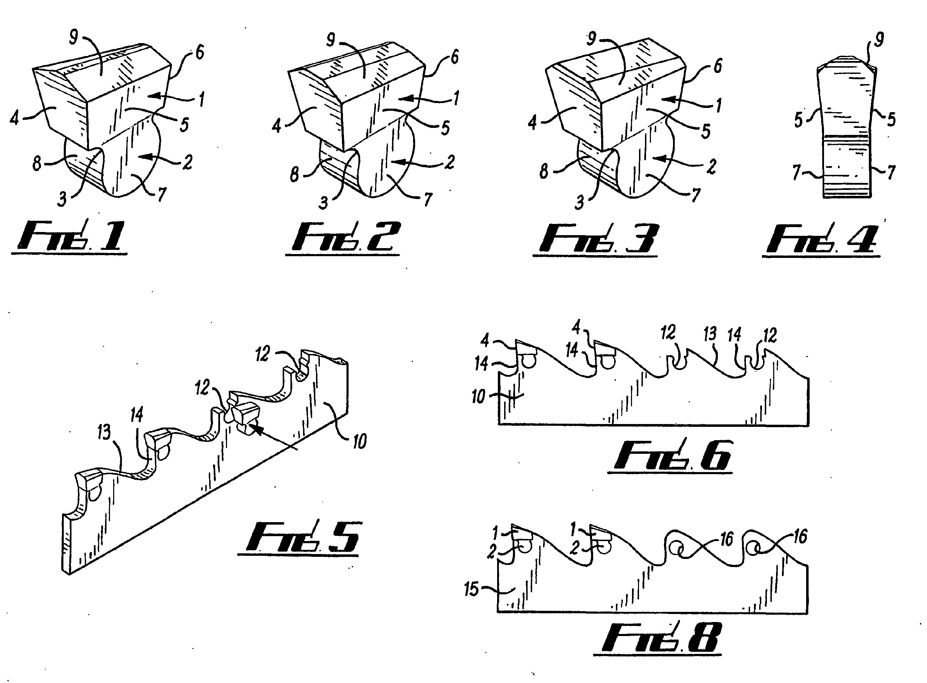

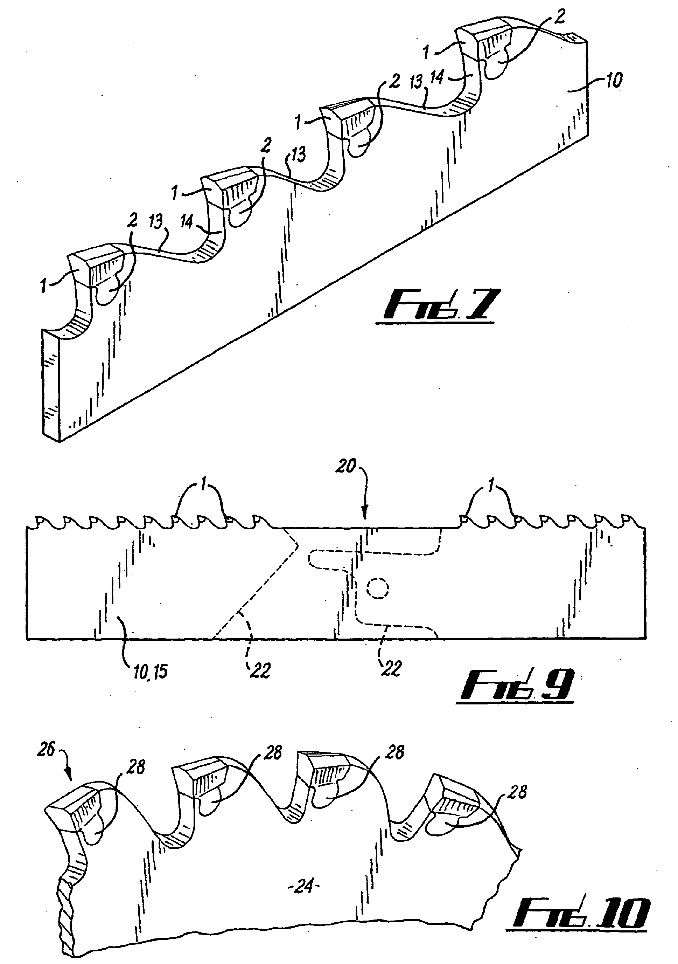

Figures 1 to 3 show teeth for a saw blade. Each tooth is moulded from tungsten carbide material in the shape illustrated, the tooth having a head 1 and a root 2 with a transition region 3 therebetween. Each head 1 has a planar front face 4, planar sides 5 and a planar rear face 6. As can be seen from Figure 4, the planar sides 5 are non parallel, converging slightly in a direction towards the root 2 of the tooth. Each root 2 has planar parallel side faces 7 which join a convex curved wall 8 along curved edges, giving the root 2 a part-circular shape in side view. On one side of the tooth, the curved edge acts as a cutting edge when the tooth is mounted on the edge of the carrier strip.

At the transition region 3, the convex wall 8 merges smoothly into a concave wall at the front of the tooth and into a concave wall at the rear of the tooth, these two concave walls merging into respective shoulders where they are adjoin the head of the tooth. As a result, when each tooth is viewed from the side the transition region 3 forms a neck which has a narrower width than the maximum width of the head 1 and a narrower width than the maximum width of the root 2.

The teeth of Figures 1 to 3 differ their characteristics. In particular, they differ in the shapes of the upper portions of their heads. The tooth of Figure 1 has a comparatively large chamfer 9 formed (by moulding of the tooth) along each top edge, the tooth of Figure 3 has a comparatively small chamfer 9 formed along each top edge and the tooth of Figure 2 has an intermediate size of chamfer 9. As a consequence, the front cutting faces 4 of the teeth present different shapes and different cutting areas. The teeth of Figures 1 to 3 may also differ in composition or other characteristics.

The three teeth of Figures 1 to 3 form a group of three teeth which are mounted in the carrier strip 10 (Figures 5 and 6) which is made from a flexible steel strip which is comparatively soft in relation to the hard material of the teeth. The carrier strip 10 is punched to have the profile shown in Figure 6, there being at regularly spaced positions a series of apertures each in the form of an arcuate slot 12 open to the edge of the carrier strip 10. Between adjacent slots 12 the carrier strip edge has an inclined portion 13 merging into a vertical portion 14.

The root 2 of each tooth is oversize in relation to the slot 12 and each root is forced into a corresponding slot 12, as indicated by the arrow in Figure 5, with attendant displacement and deformation of the material of the carrier strip 10. When the teeth have been located in the carrier strip edge in this manner, the teeth are anchored in the carrier strip by brazing. The shape of the neck and the provision of shoulders between the neck and the head contribute to a firm attachment of each tooth in the strip 10. As best seen from Figure 6, the front face 4 of each tooth forms a smooth continuation with the corresponding vertical wall portion 14 and the inclined wall portion 13 forms a smooth continuation of the chamfered top edge of each tooth. By pre-forming the shapes of the teeth, there is no need for a grinding operation to be carried out, although a small degree of finish grinding may be carried out.

Figure 7 shows the group of three teeth mounted in the carrier strip 10 and also the first tooth of the next group. Thus, the resulting linear edge saw blade has successive groups of teeth, with each group consisting of the three teeth shown in Figures 1 to 3. The cutting direction is towards the left as the blade is viewed in Figure 7.

Figure 8 shows a modified shape of carrier strip 15 where each aperture is in the form of a hole 16 punched through the strip near the edge of the latter, instead of being a slot open to the edge of the strip. Each tooth is punched into a corresponding hole 16, the result being as shown at the left hand end of Figure 8.

Figures 5 to 8 show carrier strips 10 and 15 where the teeth are forced into preformed apertures from the side of the carrier strip. Instead, the teeth may be forced downwardly, into slots in a carrier strip, relying on the elasticity of the latter to receive and then retain the teeth prior to brazing.

Figure 9 illustrates a position along the strip 10 or 15, at which there is a relatively large gap 20 between teeth. This allows the strip 10, 15 to be cut or stamped to form reciprocating saw blades of a desired length and tang style, for example by separating the blade along the broken lines 22 of Fig. 9.

Figures 5 and 7 show the teeth being mounted on a carrier strip of a linear edge saw blade. When the invention is applied to a circular saw blade, a disc-like carrier 24 (Fig. 10) has an outer periphery 26 around which the groups of teeth 28 (corresponding to the teeth of Figures 1 and 4) are mounted, preferably by being forced into the edge of the softer carrier 24 in a manner similar to that described for the linear edge saw blade. Thus, each tooth has a root with a cutting edge enabling the tooth to be forced into the edge of the carrier with attendant displacement and deformation of the material of the carrier. This locates the tooth in the carrier 24 prior to brazing.

Thus, for both the linear edge and circular saw blades, the waisted teeth punch their own keyways in the carrier to locate the teeth in the carrier, after which the teeth are anchored in position by brazing.

## Claims

1. A method of making a saw blade, the method comprising fabricating a plurality of relatively hard teeth having differing characteristics, mounting the teeth at desired spaced mounting positions on a carrier of a relatively soft material and securing the teeth in their positions, wherein the teeth have teeth roots with peripheries which form cutting edges to displace the material of the carrier as the inserts are forced into position.

2. A method according to claim 1, wherein the teeth differ in shape.

3. A method according to claim 1 or 2, wherein the teeth differ in composition.

4. A method according to any of claims 1 to 3, wherein the pitch of the teeth along the carrier is constant.

5. A method according to any of claims 1 to 3, wherein the pitch of the teeth varies along the carrier.

6. A method according to any of claims 1 to 5, wherein the blade has a linear edge.

7. A method according to any of claims 1 to 5, wherein the blade has a curved edge.

8. A method according to claim 7, wherein the blade edge is circular.

9. A tooth for a saw blade, the tooth having a root for attachment to a carrier of the blade and a head forming a cutting portion of the tooth when the latter is advanced in the cutting direction, the root and head being separated by a transition region-which, when the tooth is viewed in side view transverse to the cutting direction, is in the shape of a neck as a consequence of having a width less than the maximum width of the root and less than the maximum width of the head and wherein the root has a periphery which is curvilinear in side view, the curvilinear edge being sufficiently sharp to enable the insert to be forced into the carrier from one side thereof.

## Patentansprüche

1. Verfahren zum Herstellen eines Sägeblatts, wobei das Verfahren die folgenden Schritte aufweist: Fertigen einer Vielzahl relativ harter Zähne mit unterschiedlichen Eigenschaften; Anbringen der Zähne an gewünschten beabstandeten Anbringungsstellen an einem Träger aus einem relativ weichen Material; und Befestigen der Zähne an ihren Stellen, wobei die Zähne Zahnwurzeln mit Rändern haben, die Schneidkanten bilden, um das Material des Trägers zu verdrängen, wenn die Einsätze in ihre Stellung gedrückt werden.

2. Verfahren nach Anspruch 1, **dadurch gekennzeichnet, dass** die Zähne unterschiedliche Formen haben.

3. Verfahren nach Anspruch 1 oder 2, **dadurch gekennzeichnet, dass** die Zähne unterschiedliche Zusammensetzungen haben.

4. Verfahren nach einem der Ansprüche 1 bis 3, **dadurch gekennzeichnet, dass** der Abstand der Zähne entlang des Trägers konstant ist.

5. Verfahren nach einem der Ansprüche 1 bis 3, **dadurch gekennzeichnet, dass** der Abstand der Zähne entlang des Trägers variiert.

6. Verfahren nach einem der Ansprüche 1 bis 5, **dadurch gekennzeichnet, dass** das Blatt eine lineare Kante hat.

7. Verfahren nach einem der Ansprüche 1 bis 5, **dadurch gekennzeichnet, dass** das Blatt eine gekrümmte Kante hat.

8. Verfahren nach Anspruch 7, **dadurch gekennzeichnet, dass** die Blattkante kreisförmig ist.

9. Zahn für ein Sägeblatt, wobei der Zahn aufweist: eine Wurzel zur Anbringung an einem Träger des Blatts; sowie einen Kopf, der einen Schneidabschnitt des Zahns bildet, wenn dieser in der Schneidrichtung vorwärts bewegt wird, wobei die Wurzel und der Kopf durch einen Übergangsbereich getrennt sind, der bei Betrachtung des Zahns in einer Seitenansicht quer zur Schneidrichtung halsförmig ist, da er eine Breite hat, die kleiner als die maximale Breite der Wurzel und kleiner als die Breite des Kopfs ist, und wobei die Wurzel einen Rand hat, der in der Seitenansicht kurvenförmig ist, wobei die kurvenförmige Kante ausreichend scharf ist, um das Eineindrücken des Einsatzes in den Träger von einer seiner Seiten zu ermöglichen.

## Revendications

1. Procédé de production d'une lame de scie, le procédé comprenant la fabrication d'une pluralité de dents relativement dures ayant des caractéristiques différentes, le montage des dents en des positions de montage espacées souhaitées sur un support d'un matériau relativement mou et la fixation des dents dans leurs positions, dans lequel les dents ont des racines de dents avec des périphéries qui forment des arêtes tranchantes pour déplacer le matériau du support à mesure que les inserts sont forcés en position.

2. Procédé selon la revendication 1, dans lequel les dents diffèrent en termes de forme.

3. Procédé selon la revendication 1 ou 2, dans lequel les dents différent en termes de composition.

4. Procédé selon l'une quelconque des revendications 1 à 3, dans lequel le pas des dents le long du support est constant.

5. Procédé selon l'une quelconque des revendications 1 à 3, dans lequel le pas des dents varie le long du support.

6. Procédé selon l'une quelconque des revendications 1 à 5, dans lequel la lame comporte une arête linéaire.

7. Procédé selon l'une quelconque des revendications 1 à 5, dans lequel la lame comporte une arête incurvée.

8. Procédé selon la revendication 7, dans lequel l'arête de lame est circulaire.

9. Dent pour une lame de scie, la dent ayant une racine pour attache à un support de la lame et une tête formant une partie tranchante de la dent lorsque cette dernière est avancée dans la direction de coupe, la racine et la tête étant séparées par une région de transition qui, lorsque la dent est vue en vue latérale transversalement à la direction de coupe, est sous la forme d'un col comme conséquence d'avoir une largeur inférieure à la largeur maximale de la racine et inférieure à la largeur maximale de la tête et dans laquelle la racine comporte une périphérie qui est curviligne en vue latérale, l'arête curviligne étant suffisamment tranchante pour permettre de forcer l'insert dans le support à partir d'un côté de celui-ci.
